# EUROPEAN PATENT APPLICATION

(11) **EP 4 203 124 A1**
(43) Date of publication of application: **28.06.2023**
(21) Application number: 22200609.0
(22) Date of filing: 10.10.2022
(51) Int. Cl.: H01M 10/04, H01M 50/103, H01M 50/119, H01M 50/14, H01M 50/471

(54) **POWER STORAGE DEVICE**

(30) Priority: 21.12.2021 JP 2021207508
(71) Applicant: Prime Planet Energy & Solutions, Inc., Chuo-ku Tokyo 103-0022 (JP)
(72) Inventor: TADA, Naoya, Tokyo, 103-0022 (JP)
(74) Representative: Kuhnen & Wacker Patent- und Rechtsanwaltsbüro PartG mbB

(57) **Abstract**

A power storage device (1) is provided with a movement restricting member (30) including: an electrode-body bonding portion (31) bonded to a fixing surface (20Amh, 20Bmh) of a thickness-direction outside surface (20Aml, 20Am2, 20Bml, 20Bm2) of outer surfaces (20Am, 20Bm) of an electrode body (20A, 20B); and an extended portion (33) extending from the electrode-body bonding portion (31) and protruding more than the electrode body (20A, 20B) in a movement restricting direction (SH1, SH2, SH3, SH4). When the electrode body (20A, 20B) moves in the movement restricting direction (SH1, SH2, SH3, SH4), the extended portion (33) contacts an inner peripheral surface (10n) of a can (10), thereby restricting the electrode body (20A, 20B) from moving in the movement restricting direction (SH1, SH2, SH3, SH4).

## Description

### BACKGROUND

### Technical field

The present disclosure relates to a power storage device in which an electrode body is housed in a can.

### Related Art

Conventionally, as power storage devices, such as batteries and capacitors, there are known power storage devices in which an electrode body is housed in a cylindrical or rectangular box-shaped can, or casing. A positive terminal and a negative terminal of the power storage device are each fixedly provided in the can in an electrically insulated state, and they are electrically connected to the electrode body inside the can. For example, Patent document 1 (see FIG. 1 and others) discloses such a battery configured as above.

### Citation List

Patent Document 1: Japanese unexamined patent application publication No. 2021-150052

### SUMMARY

### Technical Problems

If the power storage device is subjected to external strong impacts or shocks, e.g., if a vehicle equipped with this power storage device collides against an object, the electrode body housed in the can may significantly move, or become displaced. This movement may cause damage to the connected portions of the electrode body with the positive and negative terminals and may deform or damage the electrode body itself due to collision with the inner surface of the can or the internal components, constituting a current shutoff mechanism or the like, arranged inside the can. There is also a risk of deformation of the can and damage to the internal components.

The present disclosure has been made to address the above problems and has a purpose to provide a power storage device that restricts movement of an electrode body in a can even if the power storage device is subjected to external shocks, thereby preventing damages to the electrode body, the can, and others.

### Means of Solving the Problems

(1) To achieve the above-mentioned purpose, one aspect of the present disclosure provides a power storage device comprising: a can; and an electrode body housed in the can, the electrode body including electrode sheets, characterized in that the electrode body has outer surfaces including a thickness-direction outside surface located outside in a thickness direction of the electrode sheets, the power storage device further comprises: a movement restricting member placed in the can, the movement restricting member including: an electrode-body bonding portion bonded to a fixing surface that is at least a part of the thickness-direction outside surface; and an extended portion extending from the electrode-body bonding portion and protruding more than the electrode body in a movement restricting direction, and when the electrode body moves in the movement restricting direction, the extended portion of the movement restricting member contacts an inner peripheral surface of the can to restrict movement of the electrode body in the movement restricting direction.

The power storage device is provided with the movement restricting member including the electrode-body bonding portion and the extended portion. In this power storage device, therefore, when the the electrode body in the can moves in the movement restricting direction due to external impacts or shocks applied on the power storage device, the movement restricting member first contacts the inner peripheral surface of the can, thus restricting the movement of the electrode body in the movement restricting direction. This configuration can prevent damage to the electrode body, the can, and others.

The movement restricting member is configured with the electrode-body bonding portion shaped to fix to the fixing surface of the electrode body and the extended portion extending from the electrode-body bonding portion and protruding more than the electrode body in the movement restricting direction so that the extended portion contacts the inner peripheral surface of the can when the electrode body moves in the movement restricting direction. The movement restricting member preferably has sufficient rigidity and dimensions, such as thickness, not to easily cause deformation even if the extended portion makes impulsive contact with the inner peripheral surface of the can. The material of the movement restricting member may include for example insulating resin, such as polypropylene, polyethylene, and PET.

The power storage device may include for example a rectangular, or prismatic, power storage device in which a rectangular parallelepiped electrode body is housed in a rectangular can having a rectangular parallelepiped box shape, a cylindrical power storage device in which a cylindrical electrode body is housed in a cylindrical can, and so on. The rectangular parallelepiped electrode body housed in the can may include, for example, a laminated electrode body having a flat rectangular parallelepiped shape formed of a plurality of rectangular electrode sheets alternately laminated one on another with separators interposed therebetween, a wound electrode body having a flat rectangular parallelepiped shape formed of a pair of strip-shaped electrode sheets wound in a flat shape by interposing a strip-shaped separator therebetween. As alternatives, the power storage device may further include a power storage device in which a single electrode body is housed in a can and also a power storage device in which multiple electrode bodies are housed together in a can.

The electrode sheets may include for example a positive electrode sheet provided with a positive active material layer on each of main surfaces of a current collecting foil, a negative electrode sheet provided with a negative active material layer on each of main surfaces of a current collecting foil, and also an electrode sheet for bipolar batteries, provided with a positive active material layer on one of main surfaces of a current collecting foil and a negative active material layer on the other main surface.

The outer surfaces of the electrode body include, for the laminated electrode body, a pair of principal flat surfaces (thickness-direction outside surfaces) located outside in the thickness direction of the laminated electrode sheets and end surfaces connecting the pair of principal flat surfaces. For the wound electrode body, the outer surfaces include an outer peripheral surface (thickness-direction outside surfaces) located around a winding axis and axial-direction end surfaces located on both sides in the axial direction of the winding axis.

The thickness-direction outside surface of the outer surfaces corresponds to the face of the electrode sheet, located outside in the thickness direction. For the laminated electrode body, the pair of principal flat surfaces each correspond to the thickness-direction outside surface. For the wound electrode body, the outer peripheral surface corresponds to the thickness-direction outside surface. When the wound electrode body has a flat shape, the outer peripheral surface (the thickness-direction outside surface) includes a pair of principal flat surfaces and a pair of semi-cylindrical surfaces connecting the principal flat surfaces.

The fixing surface of the thickness-direction outside surface is a portion to which the electrode-body bonding portion of the movement restricting member is bonded. The fixing surface can be a whole area of the thickness-direction outside surface or alternatively a partial area of the thickness-direction outside surface.

The movement restricting direction represents a direction in which movement of the electrode body is restricted by the movement restricting member fixed thereto. In addition, the "restricting movement of the electrode body in the movement restricting direction" includes reducing movement of the electrode body in the movement restricting direction as compared with a configuration provided with no movement restricting member, and further includes disabling, or blocking, movement of the electrode body in the movement restricting direction.

(2) The foregoing power storage device described in (1) may be configured such that the can is a rectangular can having a rectangular parallelepiped box shape, including: a pair of parallel rectangular main face parts; and a bottom face part, a top face part opposite the bottom face part, a first lateral face part, and a second lateral face part opposite the first lateral face part, these face parts joining the pair of rectangular main face parts, the fixing surface of the electrode body is parallel to the pair of the rectangular main face parts of the rectangular can, and the movement restricting member includes, as the extended portion , at least one of: a bottom-side extended portion protruding more than the electrode body toward the bottom face part; a top-side extended portion protruding more than the the electrode body toward the top face part; a first lateral-surface-side extended portion protruding more than the the electrode body toward the first lateral face part; and a second lateral-surface-side extended portion protruding more than the the electrode body toward the second lateral face part.

In this rectangular parallelepiped power storage device, which will be also referred to as a rectangular power storage device, the movement restricting member includes at least one of the bottom-side extended portion, the top-side extended portion, the first lateral-surface-side extended portion, and the second lateral-surface-side extended portion. Thus, when the rectangular power storage device is subjected to impact or the like and hence the electrode body housed therein moves toward the bottom face part, the top face part, the first lateral face part, or the second lateral face part, the above-identified configuration can restrict this movement to prevent damages to the electrode body, the rectangular can, and others.

This rectangular power storage device may include for example a power storage device internally provided with a rectangular parallelepiped laminated electrode body or a power storage device internally provided with a flat wound electrode body.

(3) In the foregoing power storage device described in (2), the movement restricting member may be a flat plate extending in parallel to the pair of rectangular main face parts of the can.

In this power storage device, the movement restricting member is a flat plate and hence the movement restricting member can be easily produced. Therefore, the rectangular power storage device can also be easily produced at low costs, even while containing the movement restricting member.

(4) Alternatively, in the foregoing power storage device described in (2), the extended portion of the movement restricting member may be a deformation-restraining extended portion that is restrained from being deformed in each direction perpendicular to the movement restricting direction when the electrode body moves in the movement restricting direction and collides against the inner peripheral surface of the rectangular can.

When the extended portion has a flat plate shape as a whole, if this flat-plate-shaped extended portion collides against the inner peripheral surface of the can, the extended portion may be deformed in a direction perpendicular to the movement restricting direction; for example, a middle portion of the extended portion may buckle or the distal end of the extended portion may slip on the inner peripheral surface of the can and then bend in the thickness direction. Then, the electrode body may not be sufficiently restricted from movement in the movement restricting direction, so that the electrode body may further move in the movement restricting direction.

In contrast, in the power storage device configured as above, the extended portion of the movement restricting member, i.e., the bottom-side extended portion, the top-side extended portion, the first lateral-surface-side extended portion, or the second lateral-surface-side extended portion, is configured as the deformation-restraining extended portion. Accordingly, even when the deformation-restraining extended portion collides against the inner peripheral surface of the can due to movement of the electrode body in the movement restricting direction, deformation of the extended portion is restrained in each direction perpendicular to the movement restricting direction. This configuration can further appropriately restrict the movement of the electrode body in the movement restricting direction.

The extended portion may include for example the following form, i.e., the flat-plate-shaped extended body portion is partially added with a restraining portion for restraining deformation of this extended body portion. A concrete example is configured such that a distal end of the flat-plate-shaped extended body portion or the like is provided with a restraining portion extending in a T shape in the thickness direction of the extended body portion. This restraining portion is restricted from movement in the thickness direction of the extended body portion to prevent the distal end of the extended body portion from moving in the thickness direction of the extended body portion and bending in the thickness direction.

Alternatively, the extended portion may be configured to prevent deformation of the entire extended portion. To be concrete, the extended portion itself may be formed in a wavy shape with concavities and convexities repeated in the planar direction of the rectangular main face part and in the direction perpendicular to the movement restricting direction, i.e., may be corrugated over the entire area of the extended portion, to enhance the rigidity in the planar direction to prevent buckling and bending of the extended portion.

(5) The foregoing power storage device described in one of (2) to (4) may be configured such that the electrode body includes a plurality of electrode bodies, the plurality of electrode bodies are stacked and placed between the pair of rectangular main face parts of the rectangular can, and the movement restricting member is sandwiched between adjacent two of the plurality of electrode bodies and bonded to each electrode body.

In this power storage device, the plurality of electrode bodies housed therein are arranged in a stacked state between the pair of rectangular main face parts of the rectangular can. In addition, the movement restricting member is bonded to two adjacent electrode bodies through the electrode-body bonding portions sandwiched between these electrode bodies. Therefore, this single movement restricting member can restrict movement of two electrode bodies in the movement restricting direction and thus prevent damages to those two electrode bodies.

Even a power storage device including three or more electrode bodies can be configured as above as long as the movement restricting member is provided between at least one pair of the electrode bodies to restrict movement of the two electrode bodies holding the movement restricting member therebetween.

However, it is preferable to restrict the movement of all the electrode bodies contained in the power storage device with the movement restricting member or members. For example, when four electrode bodies, i.e., two pairs of electrode bodies, are contained, two movement restricting members may be provided to separately restrict movement of each pair of electrode bodies. Furthermore, a plurality of movement restricting members may be provided each between adjacent two of the electrode bodies.

(6) In the foregoing power storage device described in one of (1) to (5), the movement restricting member may be bonded, at the electrode-body bonding portion, to the fixing surface facing the can, of the electrode body.

In this power storage device, the movement restricting member is bonded to the fixing surface of the electrode body facing the can. Specifically, the movement restricting member is positioned between the electrode body and the can. This simple configuration can restrict movement of the electrode body in the movement restricting direction.

(7) In the foregoing power storage device described in one of (1) to (6), the electrode body may be an integrated electrode body in which the electrode sheets and separators interposed between the electrode sheets are integrally bonded to each other.

Since the electrode body housed in the power storage device is the integrated electrode body, when the fixing surface of this integrated electrode body is bonded to the electrode-body bonding portion of the movement restricting member, the movement of the entire integrated electrode body in the movement restricting direction can be reliably restricted. The integrated electrode body includes an integrated laminated electrode body, an integrated flat wound electrode body, and an integrated cylindrical wound electrode body.

(8) In the foregoing power storage device described in (7), the electrode sheets may be positive electrode sheets and negative electrode sheets, and the integrated electrode body may be an integrated laminated electrode body in which a plurality of the positive electrode sheets and a plurality of the negative electrode sheets are alternately laminated with the separators interposed therebetween.

When the electrode body is a laminated electrode body, if the power storage device is subjected to external impacts or shocks and hence the laminated electrode body in the can moves in the movement restricting direction perpendicular to the lamination direction, the entire laminated electrode body moves and further the electrode sheets, i.e., the positive electrode sheet and the negative electrode sheets, forming the laminated electrode body, also individually move. Such moving often causes collapse of the laminated state, such as the overlapping state, of the electrode sheets.

In contrast, in the foregoing power storage device, the laminated electrode body housed therein is the integrated laminated electrode body. Thus, even when the power storage device is subjected to external impacts or shocks, the laminated state of the integrated laminated electrode body can be reliably maintained.

The separator incorporated in the integrated laminated electrode body may include for example a plurality of cut-sheet-shaped separators each interposed between negative electrode sheets and positive electrode sheets and also a strip-shaped separator folded in Z-fold, i.e., in zigzag form, so that the separator is interposed between negative electrode sheets and positive electrode sheets which are alternately laminated.

### BRIEF DESCRIPTION OF THE DRAWINGS

FIG. 1 is a cross-sectional view of a battery in a vertical direction and a lateral direction including a cross-section of a movement restricting member in a first embodiment, cut along an A-A line in FIG. 3;
FIG. 2 is a cross-sectional view of the battery in the vertical direction and the lateral direction including a cross-section of an electrode body in the first embodiment, cut along a C-C line in FIG. 3;
FIG. 3 is a cross-sectional view of the battery in the lateral direction and a thickness direction in the first embodiment, cut along a B-B in FIGs. 1 and 2;
FIG. 4 is a plan view of the movement restricting member in the first embodiment;
FIG. 5 is a cross-sectional view of a battery in the vertical direction and the lateral direction including a cross-section of an electrode body in a second embodiment, similar to FIG. 2;
FIG. 6 is a perspective view of a movement restricting member in the second embodiment;
FIG. 7 is a cross-sectional view of a battery in the lateral direction and the thickness direction including a cross-section of an electrode body in a third embodiment, cut along a D-D in FIG. 8; and
FIG. 8 is a cross-sectional view of the battery in the lateral direction and the thickness direction in the third embodiment, cut along a line E-E in FIG. 7.

### DETAILED DESCRIPTION OF THE EXEMPLARY EMBODIMENTS

### First Embodiment

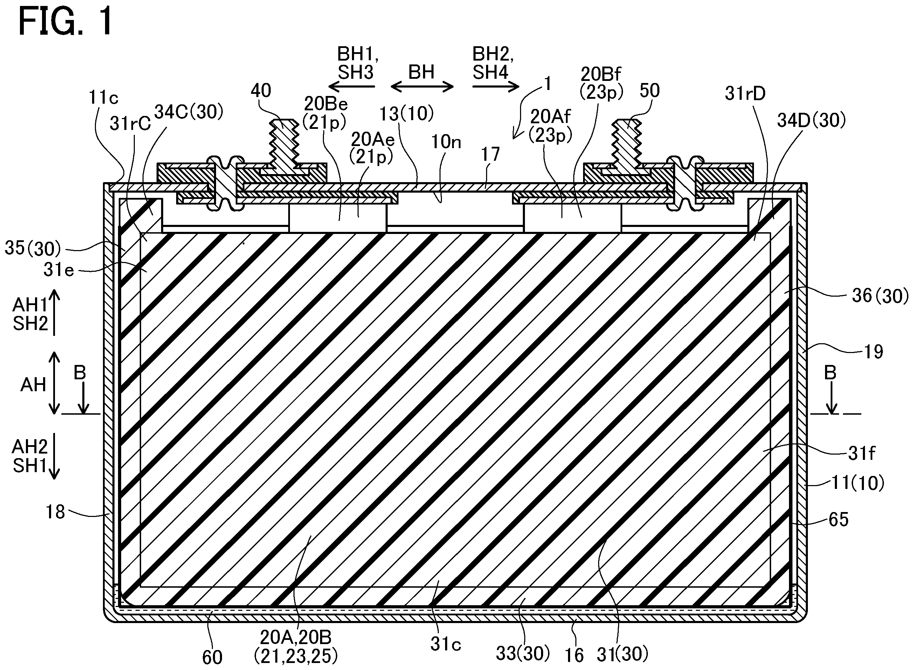

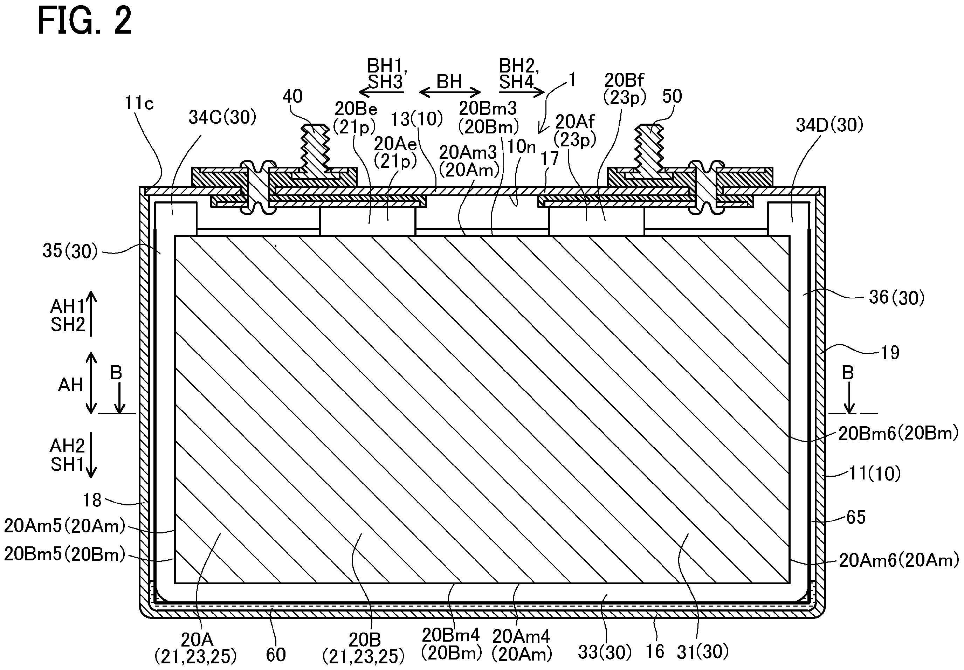

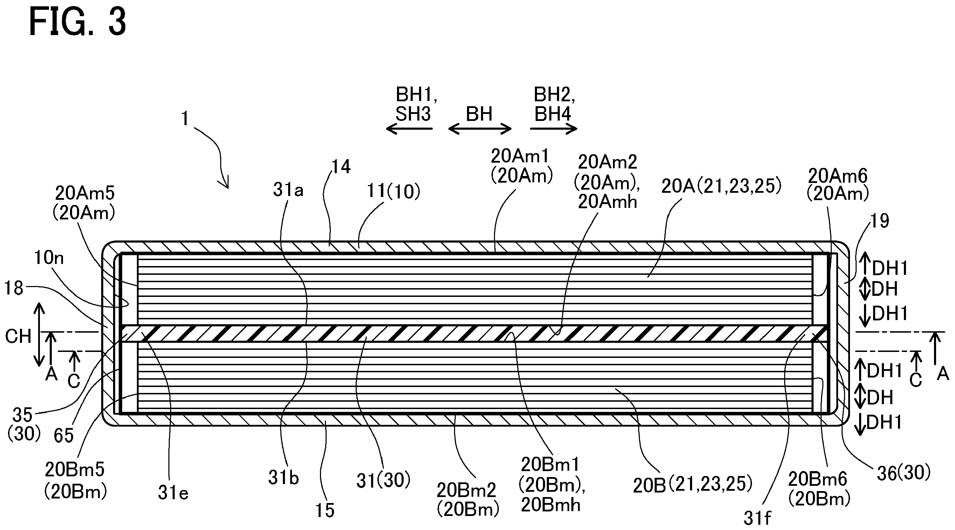

A detailed description of a first embodiment of this disclosure will now be given referring to the accompanying drawings. FIGs. 1 to 3 are cross-sectional views of a rectangular battery 1, corresponding to a rectangular power storage device, which will be also simply referred to as a battery, in the first embodiment. The vertical direction AH, the lateral direction BH, and the thickness direction CH of the battery 1 are defined as the directions indicated in FIGs. 1 to 3. This battery 1 is a sealed lithium-ion secondary battery, having a rectangular parallelepiped shape, which will be mounted in a vehicle, such as a hybrid car, a plug-in hybrid car, and an electric vehicle.

The battery 1 includes a rectangular can (hereinafter, also simply referred to as a can) 10, a pair of integrated laminated electrode bodies (hereinafter, also simply referred to as an electrode body or electrode bodies) 20A and 20B and a single movement restricting member 30, which are housed in the can 10, a positive terminal 40 and a negative terminal 50 which are supported on the can 10, and others. Further, an electrolytic solution 60 is also contained in the can 10, so that a part of the electrolytic solution 60 is impregnated in the electrode bodies 20A and 20B and another part of the electrolytic solution 60 accumulates at the bottom of the can 10. The electrode bodies 20A and 20B and the movement restricting member 30 are covered with a bag-shaped insulating film 65 that is open on one side, namely, the first side AH1 in the vertical direction AH.

The rectangular can 10 has a rectangular parallelepiped box shape, which is made of metal, for example, aluminum in the present embodiment. Specifically, the can 10 includes a pair of parallel rectangular main face parts (a first rectangular main face part 14 and a second rectangular main face part 15), a bottom face part 16, a top face part 17 opposite this bottom face part 16, a first lateral face part 18, and a second lateral face part 19 opposite this first lateral face part 18, those face parts 16-19 connecting between the pair of rectangular main face parts. This can 10 is composed of a can body 11 having a bottomed rectangular tubular shape with an opening 11c on the first side AH1 in the vertical direction AH, and a can lid 13 having a rectangular plate shape, welded to the can body 11 to close the opening 11c. The can body 11 contains the electrode bodies 20A and 20B covered with the insulation film 65. The can lid 13 is provided with a safety valve (not shown) that can break open when the internal pressure of the can 10 reaches a predetermined pressure. The can lid 13 is further formed with a liquid inlet (not shown) that connects the inside and the outside of the can 10, and is hermetically sealed with a sealing member (not shown).

In addition, the positive terminal 40, consisting of a plurality of aluminum members, is fixed to the can lid 13 in an insulated state from the can lid 13. This positive terminal 40 is conductively connected to positive electrode tabs 20Ae and 20Be (which will be described later) of the electrode bodies 20A and 20B inside the can 10, while extending through the can lid 13 to the outside of the battery 1. Further, the negative terminal 50, consisting of a plurality of copper members, is fixed to the can lid 13 in an insulated state from the can lid 13. This negative terminal 50 is conductively connected to negative electrode tabs 20Af and 20Bf (which will be described later) of the electrode bodies 20A and 20B inside the can 10, while extending through the can lid 13 to the outside of the battery 1.

The two electrode bodies 20A and 20B are stacked and placed between the first rectangular main face part 14 and the second rectangular main face part 15 of the can 10 so that the movement restricting member 30 is interposed between the electrode bodies 20A and 20B. Each of the electrode bodies 20A and 20B is a laminated electrode body having a flat rectangular parallelepiped shape, in which a plurality of rectangular positive electrode sheets (electrode sheets) 21 and a plurality of rectangular negative electrode sheets (electrode sheets) 23 are alternately laminated with rectangular separators 25 interposed therebetween. The separators 25 are formed of porous films made of resin. Each positive electrode sheet 21 and each separator 25 overlapping one another in the thickness direction DH and each negative electrode sheet 23 and each separator 25 overlapping one another in the thickness direction DH are respectively bonded with an adhesive, so that each of the electrode bodies 20A and 20B is integrated, forming an integrated laminated electrode body.

The electrode bodies 20A and 20B are each rectangular parallelepiped as described above and respectively have outer surfaces 20Am and outer surfaces 20Bm, each including six flat surfaces in general. Specifically, the outer surfaces 20Am of the electrode body 20A include a pair of a first thickness-direction outside surface 20Am1 and a second thickness-direction outside surface 20Am2, each of which has a wider area and is located on the outside DH1 in the thickness direction DH of the positive electrode sheets 21 and the negative electrode sheets 23. The outer surfaces 20Am further include four surfaces, i.e., a top surface 20Am3, a bottom surface 20Am4, a first narrow lateral surface 20Am5, and a second narrow lateral surface 20Am6, which connect the first and second thickness-direction outside surfaces 20Am1 and 20Am2. Similarly, the outer surfaces 20Bm of the electrode body 20B include a pair of a first thickness-direction outside surface 20Bm1 and a second thickness-direction outside surface 20Bm2, each of which has a wider area and is located on the outside DH1 in the thickness direction DH of the positive electrode sheets 21 and the negative electrode sheets 23. The outer surfaces 20Bm further include four surfaces, i.e., a top surface 20Bm3, a bottom surface 20Bm4, a first narrow lateral surface 20Bm5, and a second narrow lateral surface 20Bm6, which connect the first and second thickness-direction outside surfaces 20Bm1 and 20Bm2.

Of the two electrode bodies 20A and 20B, the first thickness-direction outside surfaces 20Am1 and 20Bm1 and the second thickness-direction outside surfaces 20Am2 and 20Bm2 are respectively parallel to the first rectangular main face part 14 and the second rectangular main face part 15 of the can 10. The first thickness-direction outside surface 20Am1 of the electrode body 20A faces the first rectangular main face part 14, and the second thickness-direction outside surface 20Bm2 of the electrode body 20B faces the second rectangular main face part 15. Further, the second thickness-direction outside surface 20Am2 of the electrode body 20A and the first thickness-direction outside surface 20Bm1 of the electrode body 20B are opposed to each other with the movement restricting member 30 interposed therebetween.

The movement restricting member 30 includes a bonding portion 31 bonded to the electrode bodies 20A and 20B, which will be also referred to as an electrode-body bonding portion 31. This bonding portion 31 has two main surfaces, one of which, i.e., the first main surface 31a, is bonded to the entire second thickness-direction outside surface 20Am2 of the electrode body 20A and the other, i.e., the second main surface 31b is bonded to the entire first thickness-direction outside surface 20Bm1 of the electrode body 20B. In the first embodiment, therefore, the entire second thickness-direction outside surface 20Am2 of the electrode body 20A corresponds to a fixing surface 20Amh, and the entire first thickness-direction outside surface 20Bm1 of the electrode body 20B corresponds to a fixing surface 20Bmh.

Each of the positive electrode sheets 21 includes a positive active material layer (not shown) on each main surface of a positive current collecting foil (not shown) made of a rectangular aluminum foil. The positive active material layer consists of positive active material particles that can absorb and release lithium ions, conductive particles, and a binding agent. Of each positive electrode sheet 21, an extension part extending on the first side AH1 in the vertical direction AH is a positive-electrode exposed portion 21p including no positive active material layer in the thickness direction DH, in which the positive current collecting foil is exposed in the thickness direction DH. The positive-electrode exposed portions 21p of the positive electrode sheets 21 overlap one another in the thickness direction DH, forming the positive electrode tabs 20Ae and 20Be mentioned above. These positive electrode tabs 20Ae and 20Be are electrically connected to the positive terminal 40 in the foregoing manner.

Each of the negative electrode sheets 23 includes a negative active material layer (not shown) on each main surface of a negative current collecting foil made of a rectangular copper foil. The negative active material layer consists of negative active material particles that can absorb and release lithium ions, and a binding agent. Of each negative electrode sheet 23, an extension part extending on the first side AH1 in the vertical direction AH is a negative-electrode exposed portion 23p including no negative active material layer in the thickness direction DH, in which the negative current collecting foil is exposed in the thickness direction DH. The negative-electrode exposed portions 23p of the negative electrode sheets 23 overlap one another in the thickness direction DH, forming the negative electrode tabs 20Af and 20Bf mentioned above. These negative electrode tabs 20Af and 20Bf are electrically connected to the negative terminal 50 in the foregoing manner.

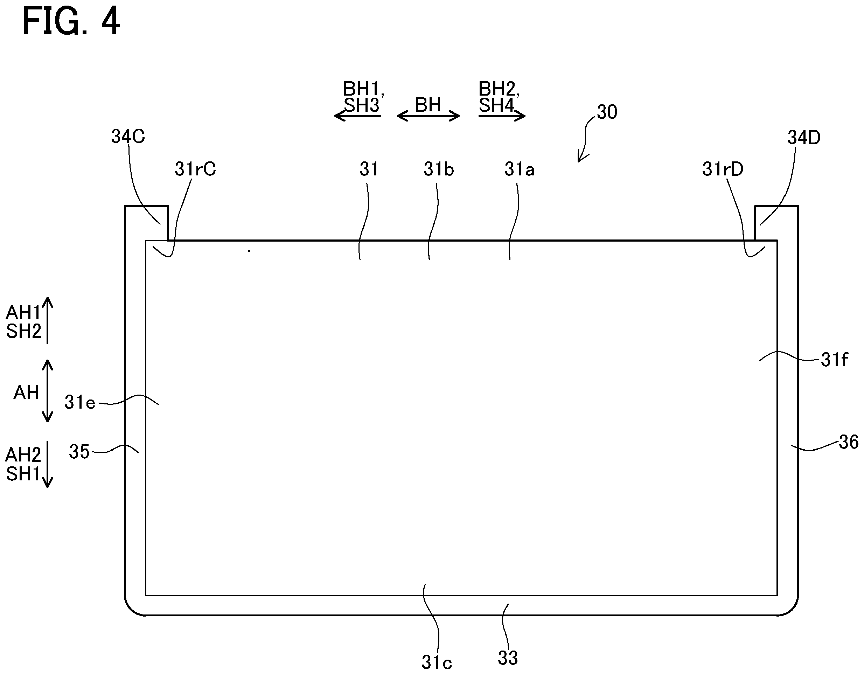

The following description is given to the movement restricting member 30, referring to FIG. 4 in addition to FIGs. 1 to 3. The movement restricting member 30 in the first embodiment is a flat plate extending in parallel to the first rectangular main face part 14 and the second rectangular main face part 15 of the can 10 and made of insulating resin, which is polypropylene in the present embodiment. The movement restricting member 30 includes the electrode-body bonding portion 31 having a rectangular plate shape and extended portions 33, 34C, 34D, 35, and 36, each extending from the bonding portion 31 and protruding more than the electrode bodies 20A and 20B in the movement restricting directions, i.e., a first movement restricting direction SH1, a second movement restricting direction SH2, a third movement restricting direction SH3, and a fourth movement restricting direction SH4. In the first embodiment, the first movement restricting direction SH1 is toward the other side, namely, the second side AH2 in the vertical direction AH, the second movement restricting direction SH2 is toward the first side AH1 in the vertical direction AH, the third movement restricting direction SH3 is toward one side, namely, the first side BH1 in the lateral direction BH, and the fourth movement restricting direction SH4 is toward the other side, namely, the second side BH2 in the lateral direction BH.

On the main surfaces 31a and 31b of the electrode-body bonding portion 31, the electrode body 20A and the electrode body 20B are respectively bonded as described above. To be specific, the entire second thickness-direction outside surface 20Am2, that is, the fixing surface 20Amh, out of the outer surfaces 20Am of one, i.e., the first electrode body 20A is bonded to the main surface 31a of the bonding portion 31. The entire first thickness-direction outside surface 20Bm1, that is, the fixing surface 20Bmh, out of the outer surfaces 20Bm of the other, i.e., the second electrode body 20B is bonded to the main surface 31b of the bonding portion 31. Thus, the bonding portion 31 is integrally sandwiched between the two electrode bodies 20A and 20B arranged adjacently in the thickness direction CH.

Meanwhile, the extended portion 33 is one example of a bottom-side extended portion of the present disclosure, which extends from an entire lower edge portion 31c of the rectangular plate-shaped electrode-body bonding portion 31 and protrudes more than the electrode bodies 20A and 20B toward the bottom face part 16 of the can 10, i.e., toward the second side AH2 in the vertical direction AH, toward the first movement restricting direction SH1, and downward in FIGs. 1 and 4. A clearance between the bottom-side extended portion 33 and the bottom face part 16 of the can 10 is about 0.2 mm. This bottom-side extended portion 33 restricts further movement of the electrode bodies 20A and 20B in the can 10 in the first movement restricting direction SH1. In other words, when the electrode bodies 20A and 20B move in the first movement restricting direction SH1, the bottom-side extended portion 33 first contacts the inner peripheral surface 10n of the can 10, concretely, the bottom face part 16, restricting the electrode bodies 20A and 20B from further moving in the first movement restricting direction SH1.

The extended portions 34C and 34D is one example of a top-side extended portions of the present disclosure, extending from corner portions 31rC at both ends on the first side AH1 in the vertical direction AH and protruding more than the electrode bodies 20A and 20B toward the top face part 17 of the can 10, i.e., toward the first side AH1 in the vertical direction AH, toward the second movement restricting direction SH2, and upward in FIGs. 1 and 4. A clearance between each of the top-side extended portions 34C and 34D and the top face part 17 of the can 10 is about 0.2 mm. These top-side extended portions 34C and 34D restrict further movement of the electrode bodies 20A and 20B in the can 10 in the second movement restricting direction SH2. In other words, when the electrode bodies 20A and 20B move in the second movement restricting direction SH2, the top-side extended portions 34C and 34D first contact the inner peripheral surface 10n of the can 10, concretely, the top face part 17, restricting the electrode bodies 20A and 20B from further moving in the second movement restricting direction SH2.

The extended portion 35 is one example of a first lateral-surface-side extended portion of the present disclosure, extending from an entire first side edge portion 31e of the rectangular plate-shaped electrode-body bonding portion 31 and protruding more than the electrode bodies 20A and 20B toward the first lateral face part 18 of the can 10, i.e., toward the first side BH1 in the lateral direction BH, toward the third movement restricting direction SH3, and leftward in FIGs. 1 and 4. A clearance between the first lateral-surface-side extended portion 35 and the first lateral face part 18 of the can 10 is about 0.2 mm. This first lateral-surface-side extended portion 35 restricts movement of the electrode bodies 20A and 20B in the can 10 in the third movement restricting direction SH3. In other words, when the electrode bodies 20A and 20B move in the third movement restricting direction SH3, the first lateral-surface-side extended portion 35 first contacts the inner peripheral surface 10n of the can 10, concretely, the first lateral face part 18, restricting the electrode bodies 20A and 20B from further moving in the third movement restricting direction SH3.

The extended portion 36 is one example of a second lateral-surface-side extended portion of the present disclosure, extending from an entire second side edge portion 31f of the rectangular plate-shaped electrode-body bonding portion 31 and protruding more than the electrode bodies 20A and 20B toward the second lateral face part 19 of the can 10, i.e., toward the second side BH2 in the lateral direction BH, toward the fourth movement restricting direction SH4, and rightward in FIGs. 1 and 4. A clearance between the second lateral-surface-side extended portion 36 and the second lateral face part 19 of the can 10 is about 0.2 mm. This second lateral-surface-side extended portion 36 restricts movement of the electrode bodies 20A and 20B in the can 10 in the fourth movement restricting direction SH4. In other words, when the electrode bodies 20A and 20B move in the fourth movement restricting direction SH4, the second lateral-surface-side extended portion 36 first contacts the inner peripheral surface 10n of the can 10, concretely, the second lateral face part 19, restricting the electrode bodies 20A and 20B from further moving in the fourth movement restricting direction SH4.

The movement restricting member 30 includes, as described above, the electrode-body bonding portion 31 bonded to the fixing surface 20Amh of the electrode body 20A and the fixing surface 20Bmh of the electrode body 20B, and the extended portions 33, 34C and 34D, 35, and 36, respectively protruding more than the electrode bodies 20A and 20B in the movement restricting directions SH1, SH2, SH3, and SH4. In the battery 1 provided with the movement restricting member 30, therefore, when the electrode bodies 20A and 20B in the can 10 move in the movement restricting directions SH1, SH2, SH3, and SH4 due to external impacts or shocks applied to the battery 1, the movement restricting member 30 first contacts the inner peripheral surface 10n of the can 10, thereby restricting movement of the electrode bodies 20A and 20B in the movement restricting directions SH1, SH2, SH3, and SH4. This configuration can prevent the electrode bodies 20A and 20B from colliding against the inner peripheral surface 10n of the can 10, thus preventing damages to the electrode bodies 20A and 20B themselves and the connected portions of the electrode bodies 20A and the 20B, such as the positive electrode tabs 20Ae and 20Be, the negative electrode tabs 20Af and 20Bf, and others, with the positive terminal 40 or the negative terminal 50.

In the first embodiment, furthermore, in the rectangular battery 1, the movement restricting member 30 includes the bottom-side extended portion 33, the top-side extended portions 34C and 34D, the first lateral-surface-side extended portion 35, and the second lateral-surface-side extended portion 36. Thus, if the battery 1 is subjected to shocks or the like, and the electrode bodies 20A and 20B housed therein move toward the bottom face part 16, top face part 17, first lateral face part 18, and second lateral face part 19, the battery 1 can restrict this movement and prevent damages to the electrode bodies 20A and 20B, the can 10, and others.

Since the movement restricting member 30 is a flat plate, this movement restricting member 30 can be easily produced. Therefore, the battery 1 can also be easily produced at low costs, even while containing the movement restricting member 30.

In the first embodiment, moreover, the two electrode bodies 20A and 20B housed in the can 10 are placed in a stacked state between the first rectangular main face part 14 and the second rectangular main face part 15 of the can 10. In addition, the movement restricting member 30 is bonded to the electrode bodies 20A and 20B through the electrode-body bonding portion 31 sandwiched between the two electrode bodies 20A and 20B. Thus, this single movement restricting member 30 can restrict movement of the two electrode bodies 20A and 20B in the movement restricting directions SH1, SH2, SH3, and SH4 to prevent damages to the two electrode bodies 20A and 20B.

In the first embodiment, the electrode bodies 20A and 20B housed in the battery 1 are the integrated electrode body, and the fixing surface 20Amh of the integrated electrode body 20A and the fixing surface 20Bmh of the integrated electrode body 20B are bonded to the electrode-body bonding portion 31 of the movement restricting member 30. Thus, the entire integrated electrode bodies 20A and 20B can be reliably restricted from movement in the movement restricting directions SH1, SH2, SH3, and SH4.

Even though the electrode bodies 20A and 20B are formed in a laminated configuration, they are each unified as described above to form the integrated laminated electrode bodies, so that the laminated state of the electrode bodies 20A and 20B can be reliably maintained even if the battery 1 is subjected to external shocks or impacts.

Next, a method for producing the battery 1 configured as above will be described below. The can lid 13 is first prepared and the positive terminal 40 and the negative terminal 50 are fixedly placed on the can lid 13 (see FIG. 1). Separately, the movement restricting member 30 is prepared, and the two electrode bodies 20A and 20B produced separately are bonded to the corresponding main surfaces 31a and 31b of the electrode-body bonding portion 31 with an adhesive. The positive terminal 40 and the negative terminal 50 fixed to the can lid 13 are welded respectively to the positive electrode tabs 20Ae and 20Be and the negative electrode tabs 20Af and 20Bf of the electrode bodies 20A and 20B having been bonded to the movement restricting member 30. Then, the electrode bodies 20A and 20B and the movement restricting member 30 are entirely covered with the bag-shaped insulation film 65.

Subsequently, the can body 11 is prepared, and the electrode bodies 20A and 20B and the movement restricting member 30 covered with the insulation film 65 are inserted into the can body 11 and then the opening 11c of the can body 11 is closed with the can lid 13. Then, the can body 11 and the can lid 13 are welded together along the entire circumference of the can lid 13, completing the can 10. After that, the electrolytic solution 60 is injected into the can 10 through a liquid inlet (not shown) of the can lid 13 and further this liquid inlet is sealingly closed with a sealing member (not shown). This battery 1 is subsequently subjected to initial charge, aging, various tests, and others. The battery 1 is thus completed.

### Second Embodiment

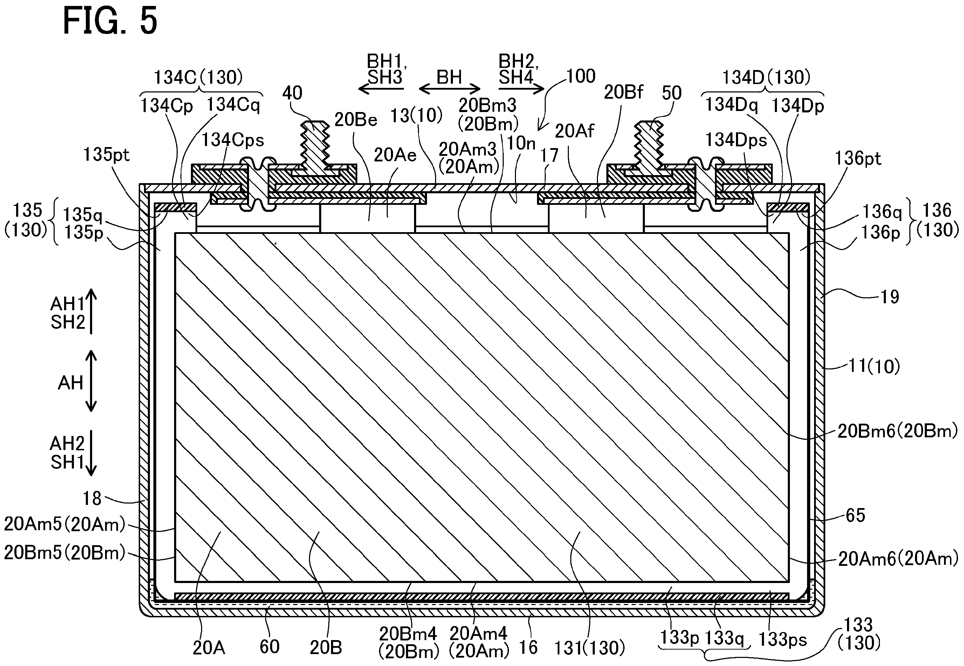

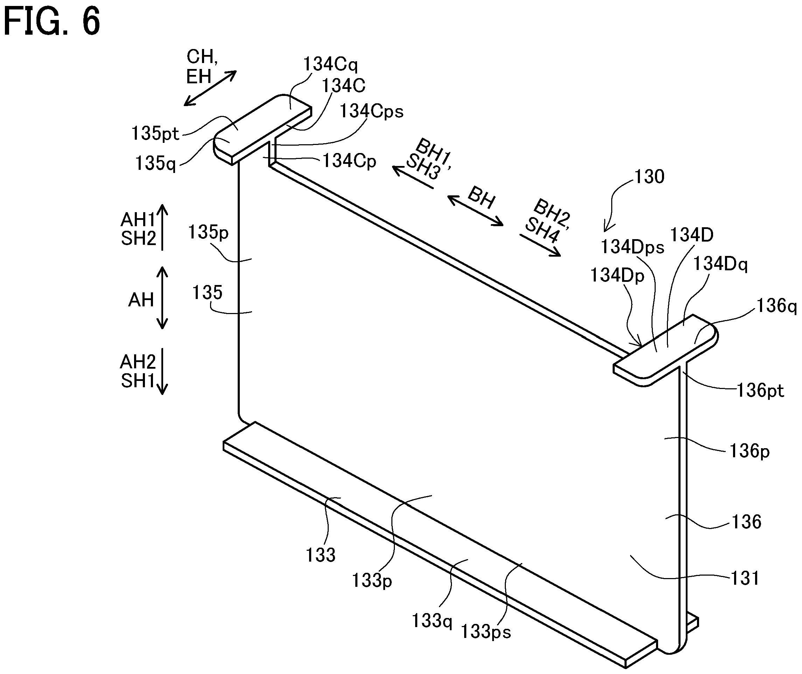

A second embodiment will be described below, referring to FIGs. 5 and 6. In the battery 1 in the first embodiment, the movement restricting member 30 incorporated therein has a flat plate shape as a whole. In contrast, in a battery 100 in the second embodiment, a movement restricting member 130 has a different configuration from that in the first embodiment. Other components or parts in the second embodiment are similar to those in the first embodiment.

The movement restricting member 130 in the second embodiment includes an electrode-body bonding portion 131 having a rectangular plate shape, and extended portions (a deformation-restraining extended portion) 133, 134C and 134D, 135, and 136, each extending from the bonding portion 131 and respectively protruding in the movement restricting directions SH1, SH2, SH3, and SH4.

The electrode-body bonding portion 131, similar to the electrode-body bonding portion 31 in the first embodiment, is bonded to two electrode bodies 20A and 20B as in the first embodiment. In contrast, the deformation-restraining extended portions 133, 134C, 134D, 135, and 136 include extended body portions 133p, 134Cp, 134Dp, 135p, and 136p, each having a flat plate shape similar to the extended portions 33, 34C, 34D, 35, and 36 in the first embodiment, and restraining portions 133q, 134Cq, 134Dq, 135q, and 136q, each extending therefrom.

Specifically, the extended body portion 133p of the deformation-restraining extended portion 133 extends from the electrode-body bonding portion 131 toward the bottom face part 16, i.e., toward the second side AH2 in the vertical direction AH, toward the first movement restricting direction SH1, and downward in FIG. 5. In a distal end portion 133ps of the extended body portion 133p, a restraining portion 133q protrudes in a T-shape in the thickness direction EH of the extended body portion 133p, that is, the thickness direction CH of the battery 100. This deformation-restraining extended portion 133 is a bottom-side extended portion and serves to restrict movement of the electrode bodies 20A and 20B in the can 10 in the first movement restricting direction SH1, similar to the bottom-side extended portion 33 in the first embodiment.

The extended body portion 134Cp of the deformation-restraining extended portion 134C and the extended body portion 134Dp of the deformation-restraining extended portion 134D each extend from the electrode-body bonding portion 131 toward the top face part 17, i.e., toward the first side AH1 in the vertical direction AH, toward the second movement restricting direction SH2, and upward in FIGs. 5 and 6. At distal end portions 134Cps and 134Dps of the extended body portions 134Cp and 134Dp, restraining portions 134Cq and 134Dq each protrude in a T-shape in the thickness direction EH of the extended body portions 134Cp and 134Dp (the thickness direction CH of the battery 100). Those deformation-restraining extended portions 134C and 134D each correspond to a top-side extended portion and serve to restrict movement of the electrode bodies 20A and 20B in the can 10 in the second movement restricting direction SH2, similar to the top-side extended portions 34C and 34D in the first embodiment.

The extended body portion 135p of the deformation-restraining extended portion 135 extends from the electrode-body bonding portion 131 toward the first lateral face part 18, i.e., toward the first side BH1 in the lateral direction BH, the third movement restricting direction SH3, and leftward in FIG. 5. At an end portion 135pt of the extended body portion 135p on the top face part 17 side, the restraining portion 135q protrudes in a T-shape in the thickness direction EH of the extended body portion 135p (the thickness direction CH of the battery 100). This deformation-restraining extended portion 135 corresponds to a first lateral-surface-side extended portion and serves to restrict movement of the electrode bodies 20A and 20B in the third movement restricting direction SH3, similar to the first lateral-surface-side extended portion 35 in the first embodiment.

The extended body portion 136p of the deformation-restraining extended portion 136 extends from the electrode-body bonding portion 131 toward the second lateral face part 19, i.e., toward the second side BH2 in the lateral direction BH, the fourth movement restricting direction SH4, and rightward in FIG. 5. At an end portion 136pt of the extended body portion 136p on the top face part 17 side, the restraining portion 136q protrudes in a T-shape in the thickness direction EH of the extended body portion 136p (the thickness direction CH of the battery 100). This deformation-restraining extended portion 136 corresponds to a second lateral-surface-side extended portion and serves to restrict movement of the electrode bodies 20A and 20B in the fourth movement restricting direction SH4 in the can 10, similar to the second lateral-surface-side extended portion 36 in the first embodiment.

In addition, the deformation-restraining extended portions 133, 134C, 134D, 135, and 136 respectively include the restraining portions 133q, 134Cq, 134Dq, 135q, and 136q, which serve to restrict respective distal end portions 133ps, 134Cps, and 134Dps and end portions 135pt and 136pt from moving in the thickness direction EH. This configuration can thus prevent the extended body portions 133p, 134Cp, 134Dp, 135p, and 136p from bending in the thickness direction EH.

Meanwhile, if each entire extended portion is flat, when this flat extended portion collides against the inner peripheral surface 10n of the can 10, the extended portion may buckle at some middle point or the distal end of the extended portion may slip on the inner peripheral surface 10n of the can 10, leading to deformation, such as bending, of the extended portion in the thickness direction EH. In such a case, the electrode bodies 20A and 20B cannot be sufficiently restrained from moving in the movement restricting direction SH1, SH2, SH3, and SH4 and may further move in the movement restricting direction SH1, SH2, SH3, and SH4.

In contrast, in the battery 100 in the second embodiment, the extended portions 133, 134C, 134D, 135, and 136 of the movement restricting member are formed as the T-shaped deformation-restraining extended portions as mentioned above. Accordingly, if the deformation-restraining extended portions 133, 134C, 134D, 135, and 136 collide against the inner peripheral surface 10n of the can 10 due to movement of the electrode bodies 20A and 20B in the movement restricting direction SH1, SH2, SH3, and SH4, those extended portions 133, 134C, 134D, 135, and 136 are restrained from deformation in each direction perpendicular to the movement restricting direction SH1, SH2, SH3, and SH4. Thus, the electrode bodies 20A and 20B can be appropriately prevented from moving in the movement restricting direction SH1, SH2, SH3, and SH4. Furthermore, similar parts to those in the first embodiment provide similar operations and effects to those in the first embodiment.

### Third Embodiment

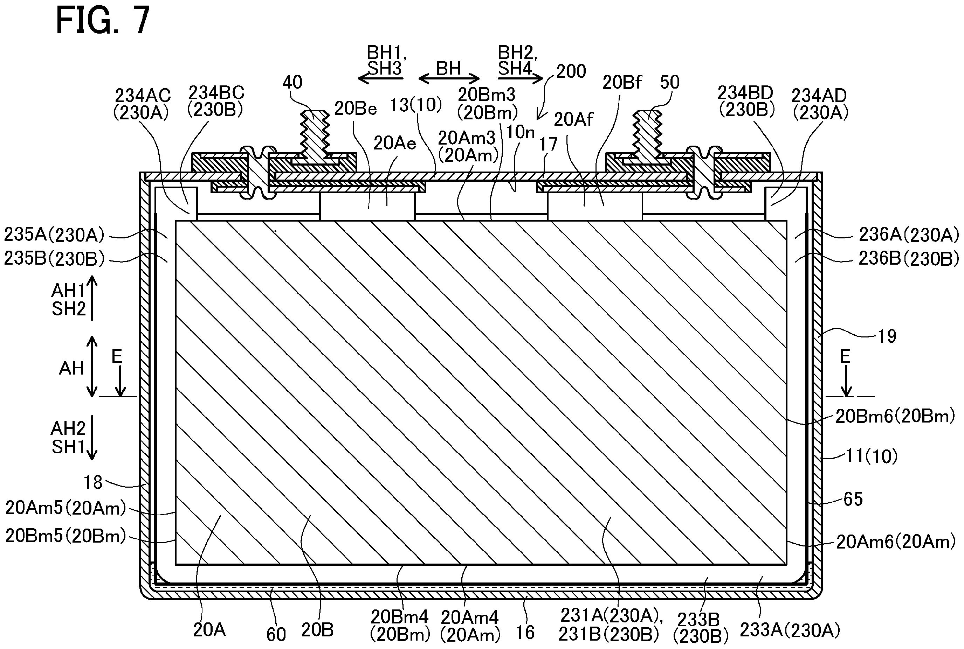

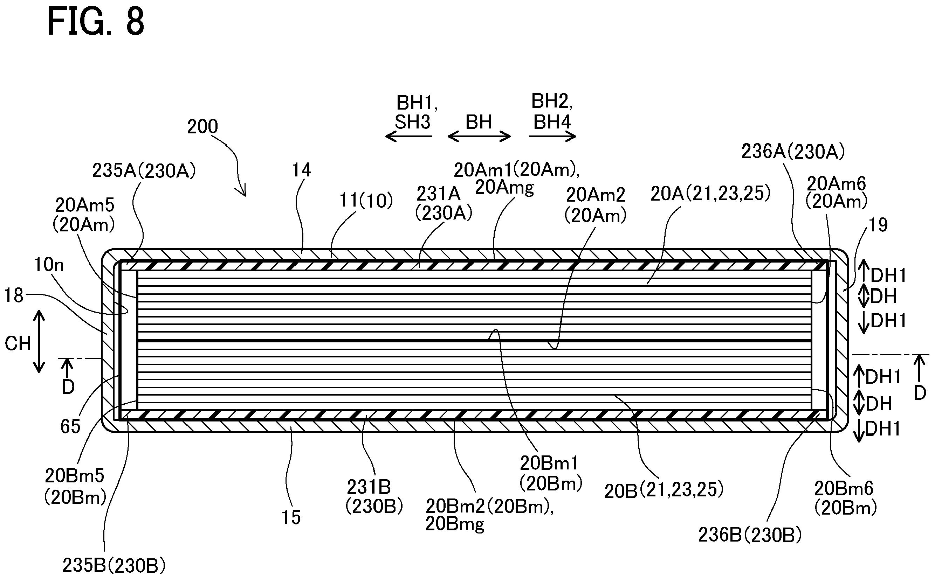

Next, a third embodiment will be described below, referring to FIGs. 7 and 8. The batteries 1 and 100 in the first and second embodiments are each configured such that the movement restricting member 30 or 130 is interposed between the pair of stacked electrode bodies 20A and 20B. In contrast, a battery 200 in the third embodiment is different from those in the first and second embodiments in that movement restricting members 230A and 230B are respectively interposed between the electrode body 20A and the can 10 and between the electrode body 20B and the can 10. Other parts or components in the third embodiment are similar to those in the first or second embodiment.

The movement restricting members 230A and 230B in the third embodiment are each configured as with the movement restricting member 30 in the first embodiment. Specifically, each of the movement restricting members 230A and 230B is a flat plate extending in parallel to the first rectangular main face part 14 and the second rectangular main face part 15 of the rectangular can 10, and includes a rectangular plate-shaped electrode-body bonding portion 231A or 231B and extended portions 233A, 234AC, 234AD, 235A, and 236A or extended portions 233B, 234BC, 234BD, 235B, and 236B, each of which extends from the corresponding electrode-body bonding portion 231A or 231B and protrudes more than the electrode bodies 20A and 20B in the movement restricting directions SH1, SH2, SH3, and SH4.

In the third embodiment, different from the first and second embodiments, the two electrode bodies 20A and 20B, also referred to as the first end second electrode bodies 20A and 20B, are directly stacked one on the other in the thickness direction CH without interposing therebetween a movement restricting member. Specifically, the one, i.e., the first movement restricting member 230A is interposed between the first electrode body 20A and the first rectangular main face part 14 of the can 10 and the other, i.e., the second movement restricting member 230B is interposed between the second electrode body 20B and the second rectangular main face part 15 of the can 10. To be specific, the electrode-body bonding portion 231A of the movement restricting member 230A is bonded to the entire first thickness-direction outside surface 20Am1 (i.e., the fixing surface 20Amg facing the can 10) of the outer surfaces 20Am of the electrode body 20A. Accordingly, the movement restricting member 230A and the electrode body 20A are integrated together, and this movement restricting member 230A restricts movement of the electrode body 20A inside the can 10. On the other hand, the electrode-body bonding portion 231B of the movement restricting member 230B is bonded to the entire second thickness-direction outside surface 20Bm2 (i.e., the fixing surface 20Bmg of the can 10) of the outer surfaces 20Bm of the electrode body 20B. Accordingly, the movement restricting member 230B and the electrode body 20B are integrated together, and this movement restricting member 230B restricts movement of the electrode body 20B inside the can 10.

Each of the extended portions 233A and 233B corresponds to a bottom-side extended portion. The bottom-side extended portion 233A of the movement restricting member 230A restricts the electrode body 20A bonded to this movement restricting member 230A from moving in the first movement restricting direction SH1, i.e., downward in FIG. 7. The bottom-side extended portion 233B of the movement restricting member 230B restricts movement of the electrode body 20B bonded to the movement restricting member 230B in the first movement restricting direction SH1.

Each of the extended portions 234AC, 234AD, 234BC, and 234BD corresponds to a top-side extended portion. The top-side extended portions 234AC and 234AD of the movement restricting member 230A restrict the electrode body 20A bonded to the movement restricting member 230A from moving in the second movement restricting direction SH2, i.e., upward in FIG. 7. The top-side extended portions 234BC and 234BD of the movement restricting member 230B restrict the electrode body 20B bonded to the movement restricting member 230B from moving in the second movement restricting direction SH2.

Each of the extended portions 235A and 235B corresponds to a first lateral-surface-side extended portion. The first lateral-surface-side extended portion 235A of the movement restricting member 230A restricts the electrode body 20A bonded to the movement restricting member 230A from moving in the third movement restricting direction SH3, i.e., leftward in FIG. 7. The first lateral-surface-side extended portion 235B of the movement restricting member 230B restricts the electrode body 20B bonded to the movement restricting member 230B from moving in the third movement restricting direction SH3.

Each of the extended portions 236A and 236B corresponds to a second lateral-surface-side extended portion. The second lateral-surface-side extended portion 236A of the movement restricting member 230A restricts the electrode body 20A bonded to this movement restricting member 230A from moving in the fourth movement restricting direction SH4, i.e., rightward in FIG. 7. The second lateral-surface-side extended portion 236B of the movement restricting member 230B restricts the electrode body 20B bonded to this movement restricting member 230B in the fourth movement restricting direction SH4.

In the third embodiment, as described above, the movement restricting members 230A and 230B are respectively bonded to the fixing surfaces 20Amg and 20Bmg, which face the can 10, of the electrode bodies 20A and 20B. The movement restricting members 230A and 230B are respectively positioned between the electrode body 20A and the can 10 and between the electrode body 20B and the can 10. Consequently, the above simple structure can restrict movement of the electrode bodies 20A and 20B in the movement restricting directions SH1, SH2, SH3, and SH4. Other parts or components in the third embodiment similar to those in the first or second embodiment provide similar operations and effects to those in the first or second embodiment.

The present disclosure is described in the foregoing first through third embodiments, but those embodiments give no limitation to the present disclosure. Thus, the present disclosure may be embodied in other specific forms without departing from the essential characteristics thereof.

For example, the first to third embodiments exemplify the battery 1 in which the pair of laminated electrode bodies 20A and 20B, each having a rectangular parallelepiped shape, are housed in the can 10. As alternatives, the number of electrode bodies housed in the can may be single or three or more. Instead of the laminated electrode bodies 20A and 20B, a rectangular battery may be configured such that a single flat wound electrode body is housed in a rectangular parallelepiped box-shaped can or alternatively plural flat wound electrode bodies are housed in a rectangular parallelepiped box-shaped can so that the electrode bodies are stacked in the thickness direction CH of the electrode bodies.

In the battery 200 in the third embodiment, the movement restricting members 230A and 230B are each interposed between the electrode body 20A or 20B and the can 10. In addition, similar to the movement restricting member 30 or 130 in the first or second embodiment, a movement restricting member may be interposed between the electrode bodies 20A and 20B and bonded to each of the electrode bodies 20A and 20B.

With this configuration, in which a movement restricting member is provided on each side of each of the laminated electrode bodies in the thickness direction, it is possible to further reliably restrict movement of the electrode body in the movement restricting direction.

In the first to third embodiments, the movement restricting members 30, 130, 230A, and 230B are bonded to the electrode bodies 20A and 20B with an adhesive, but the bonding method is not limited thereto. For example, the movement restricting members 30, 130, 230A, and 230B may be bonded to the electrode bodies 20A and 20B by heat welding using a hot press with a thermoplastic resin, such as polyvinylidene fluoride (PVDF).

In the first and second embodiments, furthermore, the entire area of the second thickness-direction outside surface 20Am2 of the electrode body 20A is assumed as the fixing surface 20Amh, while the entire area of the first thickness-direction outside surface 20Bm1 of the electrode body 20B is assumed as the fixing surface 20Bmh. In the third embodiment, moreover, the entire area of the first thickness-direction outside surface 20Am1 of the electrode body 20A is assumed as the fixing surface 20Amg, while the entire area of the second thickness-direction outside surface 20Bm2 of the electrode body 20B is assumed as the fixing surface 20Bmg.

However, it is not necessary to assume the entire area of a thickness-direction outside surface of an electrode body as a fixing surface. A partial area of the thickness-direction outside surface of the electrode body may be assumed as a fixing surface, to which an electrode-body bonding portion of a movement restricting member is bonded.

The first to third embodiments exemplify the batteries 1, 100, and 200 in which the rectangular parallelepiped, laminated electrode bodies 20A and 20B are housed in the rectangular parallelepiped box-shaped can 10. As alternatives, a single flat wound electrode body or alternatively plural flat wound electrode bodies may be housed in a rectangular parallelepiped box-shaped can. Further, a battery may be configured such that a movement restricting member for restricting movement in a winding axis direction is bonded to a peripheral surface of a cylindrical wound electrode body (a thickness-direction outside surface) and is housed in a cylindrical can.

### Reference Signs List

- 1, 100, 200: Rectangular battery (Rectangular power storage device)
- 10: Can (Rectangular can)
- 10n: Inner peripheral surface (of Can)
- 14: First rectangular main face part
- 15: Second rectangular main face part
- 16: Bottom face part
- 17: Top face part
- 18: First lateral face part
- 19: Second lateral face part
- 20A, 20B: Electrode body (Integrated electrode body, Integrated laminated electrode body)
- 20Am, 20Bm: Outer surface
- 20Am1, 20Bm1: First thickness-direction outside surface
- 20Am2, 20Bm2: Second thickness-direction outside surface
- 20Amh, 20Bmh, 20Amg, 20Bmg: Fixing surface
- 21: Positive electrode sheet (Electrode sheet)
- 23: Negative electrode sheet (Electrode sheet)
- 25: Separator
- 30,130, 230A, 230B: Movement restricting member
- 31, 131, 231A, 231B: Electrode-body bonding portion
- 33, 133, 233A, 233B: Bottom-side extended portion (Extended portion)
- 34C, 34C, 134C, 134D, 234AC, 234AD, 234BC, 234BD: Top-side extended portion (Extended portion)
- 35, 135, 235A, 235B: First lateral-surface-side extended portion (Extended portion)
- 36, 136, 236A, 236B: Second lateral-surface-side extended portion (Extended portion)
- 133, 134C, 134D, 135, 136: Deformation-restraining extended portion
- 40: Positive terminal
- 50: Negative terminal
- DH: Thickness direction (of Electrode sheet)
- DH1: Outside (in Thickness direction of Electrode sheet)
- SH1: First movement restricting direction
- SH2: Second movement restricting direction
- SH3: Third movement restricting direction
- SH4: Fourth movement restricting direction

## Claims

1. A power storage device (1; 100; 200) comprising:
a can (10); and
an electrode body (20A, 20B) housed in the can (10), the electrode body including electrode sheets (21,23),
**characterized in that**
the electrode body (20A, 20B) has outer surfaces (20Am, 20Bm) including a thickness-direction outside surface (20Am1, 20Am2, 20Bm1, 20Bm2) located outside (DH1) in a thickness direction of the electrode sheets (21, 23), and
the power storage device (1; 100; 200) further comprises:
a movement restricting member (30; 130; 230A, 230B) placed in the can (10), the movement restricting member including:
an electrode-body bonding portion (31, 131; 231A, 231B) bonded to a fixing surface (20Amh, 20Bmh, 20Amg, 20Bmg) that is at least a part of the thickness-direction outside surface (20Am1, 20Am2, 20Bm1, 20Bm2); and
an extended portion (33, 34C, 34D, 35, 36; 133, 134C, 134D, 135, 136; 233A, 233B, 234AC, 234AD, 234BC, 234BD, 235A, 235B, 236A, 236B) extending from the electrode-body bonding portion (31, 131; 231A, 231B) and protruding more than the electrode body (20A, 20B) in a movement restricting direction (SH1, SH2, SH3, SH4), and
when the electrode body (20A, 20B) moves in the movement restricting direction (SH1, SH2, SH3, SH4), the extended portion (33, 34C, 34D, 35, 36; 133, 134C, 134D, 135, 136; 233A, 233B, 234AC, 234AD, 234BC, 234BD, 235A, 235B, 236A, 236B) of the movement restricting member (30; 130; 230A, 230B) contacts an inner peripheral surface (10n) of the can (10) to restrict movement of the electrode body (20A, 20B) in the movement restricting direction (SH1, SH2, SH3, SH4).

2. The power storage device (1; 100; 200) according to claim 1, wherein
the can (10) is a rectangular can having a rectangular parallelepiped box shape, including:
a pair of parallel rectangular main face parts (14, 15); and
a bottom face part (16), a top face part (17) opposite the bottom face part (16), a first lateral face part (18), and a second lateral face part (19) opposite the first lateral face part (18), these face parts (16-19) joining the pair of rectangular main face parts (14, 15),
the fixing surface (20Amh, 20Bmh, 20Amg, 20Bmg) of the electrode body (20A, 20B) is parallel to the pair of the rectangular main face parts (14, 15) of the rectangular can (10), and
the movement restricting member (30; 130; 230A, 230B) includes, as the extended portion (33, 34C, 34D, 35, 36; 133, 134C, 134D, 135, 136; 233A, 233B, 234AC, 234AD, 234BC, 234BD, 235A, 235B, 236A, 236B), at least one of:
a bottom-side extended portion (33; 133; 233A, 233B) protruding more than the electrode body (20A, 20B) toward the bottom face part (16);
a top-side extended portion (34C, 34D; 134C, 134D; 234AC, 234AD, 234BC, 234BD) protruding more than the the electrode body (20A, 20B) toward the top face part (17);
a first lateral-surface-side extended portion (35; 135; 235A, 235B) protruding more than the the electrode body (20A, 20B) toward the first lateral face part (18); and
a second lateral-surface-side extended portion (36; 236, 236A, 236B) protruding more than the the electrode body (20A, 20B) toward the second lateral face part (19).

3. The power storage device (1; 200) according to claim 2, wherein the movement restricting member (30; 230A, 230B) is a flat plate extending in parallel to the pair of rectangular main face parts (14, 15) of the can (10).

4. The power storage device (100) according to claim 2, wherein
the extended portion (133, 134C, 134D, 135, 136) of the movement restricting member (130) is a deformation-restraining extended portion that is restrained from being deformed in each direction perpendicular to the movement restricting direction (SH1, SH2, SH3, SH4) when the electrode body (20A, 20B) moves in the movement restricting direction (SH1, SH2, SH3, SH4) and collides against the inner peripheral surface (10n) of the rectangular can (10).

5. The power storage device (1; 100) according to any one of claims 2 to 4, wherein
the electrode body includes a plurality of electrode bodies (20A, 20B),
the plurality of electrode bodies (20A, 20B) are stacked and placed between the pair of rectangular main face parts (14, 15) of the rectangular can (10), and
the movement restricting member (30; 130) is sandwiched between adjacent two of the plurality of electrode bodies (20A, 20B) and bonded to each electrode body (20A, 20B).

6. The power storage device (200) according to any one of claims 1 to 5, wherein the movement restricting member (230A, 230B) is bonded, at the electrode-body bonding portion (231A, 231B), to the fixing surface (20Amg, 20Bmg) facing the can (10), of the electrode body (20A, 20B).

7. The power storage device (1; 100; 200) according to any one of claims 1 to 6, wherein the electrode body (20A, 20B) is an integrated electrode body in which the electrode sheets (21, 23) and separators (25) interposed between the electrode sheets (21, 23) are integrally bonded to each other.

8. The power storage device (1; 100; 200) according to claim 7, wherein
the electrode sheets (21, 23) are positive electrode sheets (21) and negative electrode sheets (23), and
the integrated electrode body (20A, 20B) is an integrated laminated electrode body in which a plurality of the positive electrode sheets (21) and a plurality of the negative electrode sheets (23) are alternately laminated with the separators (25) interposed therebetween.
